# EUROPÄISCHE PATENTSCHRIFT

(11) **EP 1 650 544 B1**
(45) Veröffentlichungstag und Bekanntmachung des Hinweises auf die Patenterteilung: **03.12.2008**
(21) Anmeldenummer: 04024880.9
(22) Anmeldetag: 20.10.2004
(51) Int. Cl.: G01N 13/00

(54) **Verfahren und Vorrichtung zur Bestimmung der Benetzbarkeit einer bewegten Oberfläche sowie deren Verwendung**
Method and device for determining the wettability of a moving surface and the use thereof
Procédé et dispositif de détermination de la mouillabilité d'une surface en mouvement et leur utilisation

(43) Veröffentlichungstag der Anmeldung: 26.04.2006
(73) Patentinhaber: Softal electronic Erik Blumenfeld GmbH & Co. KG, 21107 Hamburg (DE); Fraunhofer-Gesellschaft zur Förderung der angewandten Forschung e.V., 80686 München (DE)
(72) Erfinder: Eichler, Marco, 38106 Braunschweig (DE); Nagel, Krees, 38102 Braunschweig (DE)
(74) Vertreter: von Eichel-Streiber, Caspar

(56) Entgegenhaltungen:
- WO-A-20/04077019
- US-A- 4 778 832
- PATENT ABSTRACTS OF JAPAN Bd. 012, Nr. 436 (P-787), 17. November 1988 (1988-11-17) & JP 63 167239 A (MATSUSHITA ELECTRIC IND CO LTD), 11. Juli 1988 (1988-07-11)

## Beschreibung

Die Erfindung betrifft ein Verfahren zur Bestimmung der Benetzbarkeit einer Oberfläche eines Substrates, wobei sich Vorrichtung und Substrat relativ zu einander bewegen, sowie eine Vorrichtung zur Durchführung dieses Verfahrens. Dieses Verfahren eignet sich besonders zur schnellen automatisierten Prüfung von bewegten Oberflächen in der Industrie. Bevorzugte Anwendungsgebiete sind hier die Prozessüberwachung sowie die Qualitätssicherung.

Oberflächen werden industriell auf unterschiedlichste Art und Weise modifiziert. Die Veränderung der Oberfläche geht oft mit einer Änderung der Oberflächenspannung, die auch als Oberflächenenergie bezeichnet wird, einher. Diese Änderungen betreffen zum Teil nur die oberste Schicht des Materials, welche bis zu wenige Monolagen dünn sein kann. Für viele Anwendungen ist es wichtig, den Erfolg der Oberflächenmodifizierung über die Änderung der Oberflächenspannung zu kontrollieren. Das gilt insbesondere dort, wo die Oberflächenmodifizierung eine verstärkte oder verringerte Haftung einer nachfolgenden Beschichtung (PVD- oder CVD-Beschichtung, Bedruckung, Lackierung, Metallisierung, Laminierung, Beschäumung etc.) zum Ziel hat oder wo die Funktion der Oberfläche selbst eine besondere Hydrophilie, Hydrophobie, oder einen bestimmten Wert der Oberflächenspannung erfordert.

Eine Möglichkeit zur Bestimmung der Oberflächenspannung ist die Kontaktwinkelmessung, die z.B. in der US-Norm ASTM D 5946-04 "Standard Test Method for Corona-Treated Polymer Films Using Water Contact Angle Measurements" beschrieben ist. Bei diesem Verfahren wird ein Tropfen einer definierten Flüssigkeit auf die zu untersuchende Oberfläche gesetzt und der Winkel zwischen der Tropfentangente an dem Berührungspunkt des Tropfens mit der Oberfläche des Festkörpers und der Oberflächenebene des Festkörpers bestimmt. Aus dem Kontaktwinkel kann auf die Oberflächenspannung des Festkörpers geschlossen werden. Dabei wird zwischen statischer und dynamischer Messung des Kontaktwinkels unterschieden.

Bei der statischen Kontaktwinkelmessung, wird ein Tropfen der Testflüssigkeit mit einer Nadel auf die Oberfläche gesetzt. Anschließend wird optisch der Kontaktwinkel bestimmt. Bei der dynamischen Kontaktwinkelmessung wird das Volumen des Tropfens stetig erhöht oder erniedrigt und während der fortschreitenden oder rückschreitenden Bewegung des Tropfens der Kontaktwinkel gemessen. Bei diesem Verfahren ist stets eine sehr genaue Justierung der Oberfläche notwendig und das Aufbringen des Tropfens mit einer Nadel ist technisch aufwendig. Die Messung des Kontaktwinkels durch Anlegen von Tangenten ist sehr störempfindlich.

Ein weiteres Verfahren ist die Bestimmung der Oberflächenspannung durch das Aufbringen von Testflüssigkeiten, welche bei verschiedenen Oberflächenspannungen benetzen. Dieses Verfahren ist beschrieben in der DIN ISO 8296 "Folien Bahnen - Bestimmung der Benetzungsspannung" und auch in der US-Norm ASTM D 2578-04a "Standard Test Method for Wetting Tension of Polyethylene and Propylene Films". Es wird bei diesem Verfahren festgestellt, ob eine Testflüssigkeit mit einer gegebenen Oberflächenspannung γ_{T} auf der zu prüfenden Oberfläche benetzt oder nicht. Die Testflüssigkeiten werden dabei als dünner Film auf die Oberfläche gestrichen und man beurteilt die Benetzung auf der jeweiligen Oberfläche: Zieht sich die Flüssigkeit nach dem Aufbringen zusammen, ordnet man der Oberfläche eine Oberflächenspannung γ < γ_{T} zu. Andernfalls ist γ ≥ γ_{T}. Auf diese Weise lässt sich der zugeordnete Wert der Oberflächenspannung des Festkörpers eingrenzen, wenn man eine Serie von Testflüssigkeiten mit unterschiedlichen γ_{T} verwendet.

Die Benetzung von Oberflächen unterliegt im allgemeinen einer Hysterese. Die Bewegung des Tropfenrandes ist auf technischen Oberflächen meistens kinetisch behindert. Es stellt sich kein Gleichgewichtswert der Tropfenform unabhängig von der Art der Erzeugung des Tropfens ein. So sind z. B. bei der dynamischen Kontaktwinkelmessung der fortschreitende und der rückschreitende Winkel verschieden voneinander. Damit überhaupt eine Bewegung des Tropfenrandes stattfinden kann, muss eine endliche treibende Kraft vorhanden sein, um die o.g. kinetischen Behinderungen oder Barrieren zu überwinden. Daher muss bei der Prüfung des Benetzungsverhaltens darauf geachtet werden, dass die Aufbringung der Flüssigkeit so erfolgt, dass eine hinreichende treibende Kraft für die Bewegung des Tropfenrandes vorhanden ist.

Ein weiteres Verfahren zur Bestimmung der Oberflächenspannung von festen Stoffen ist in der DE 38 25 416 A1 beschrieben. Zwar wird das dort beschriebene Verfahren zur Bestimmung der Oberflächenspannung an insbesondere laufende Folienbahnen eingesetzt, indem die Oberfläche mit einer Flüssigkeit benetzt wird. Allerdings wird bei dem in der DE 38 25 416 offenbarten Verfahren ein Abdruck des Flüssigkeitsbildes genommen z.B. mittels eines Löschblattes und dieser Abdruck später messtechnisch ausgewertet. Dieses Messverfahren kann so insbesondere nicht in situ durchgeführt werden, sondern bringt eine zeitliche Verzögerung mit sich, die ein schnelles Reagieren zum Anpassen eventuell der Verfahrensparameter bei z.B. einer Corona-Behandlung nicht ermöglicht.

Ausgehend hiervon war es Aufgabe der vorliegenden Erfindung, ein Verfahren zur Bestimmung der Benetzbarkeit von bewegten Oberflächen bereitzustellen, das sich auch bei hohen Geschwindigkeiten technisch einfach realisieren lässt, sodass der automatisierte Einsatz in der Prozessüberwachung möglich ist.

Diese Aufgabe wird durch das Verfahren mit den Merkmalen des Patentanspruchs 1 sowie durch die Vorrichtung mit den Merkmalen des Patentanspruchs 14 gelöst. Die weiteren abhängigen Ansprüche zeigen vorteilhafte Weiterbildungen auf. Eine erfindungsgemäße Verwendung des Verfahrens ist in Patentanspruch 13 angegeben.

Erfindungsgemäß wird ein Verfahren zur Bestimmung der Benetzbarkeit von Oberflächen eines Substrates bereitgestellt, das auf folgenden Verfahrensschritten beruht:

In einem ersten Schritt wird bspw. aus einem Vorratsbehälter ein Flüssigkeitsstrahl mindestens einer Flüssigkeit Fᵢ mit bekannter Oberflächenspannung γ_{T} (Fᵢ) z. B. über eine Dosiervorrichtung auf ein bewegtes Substrat aufgebracht. Dabei wird vorzugsweise die kinetische Energie des Strahls derart eingestellt, dass sich eine zusammenhängende Flüssigkeitsspur auf dem Substrat bildet. Hierdurch soll verhindert werden, dass der Flüssigkeitsstrahl beim Aufprall in kleine Tropfen und damit zusammenhanglose Benetzungsflächen zerfällt. Die kinetische Energie des Flüssigkeitsstrahls kann bspw. über die Dosiervorrichtung sowohl in Abhängigkeit vom Abstand der Dosiervorrichtung zur Oberfläche als auch in Abhängigkeit von der Strahlgeschwindigkeit eingestellt werden. Eine hohe Strahlgeschwindigkeit bewirkt dabei eine starke Ausbreitung des Tropfens auf der Oberfläche mit dementsprechend großer Benetzungsfläche.

Nach Einstellung des statischen Zustands der Flüssigkeitsspur, d.h. zu einem Zeitpunkt, wo keine deutliche Änderung der Benetzungsfläche mehr eintritt, erfolgt die Messung der Spurbreite. Abschließend erfolgt eine Auswertung der Spurbreite, für die Bestimmung der Benetzbarkeit der Oberfläche des Substrats.

Diese Auswertung erfolgt anhand der folgenden Kriterien:
a) Das Substrat ist benetzbar, wenn die Spurbreite zwischen dem Auftreffen der Flüssigkeit und der Einstellung des statischen Zustands konstant bleibt oder zunimmt. Hierbei behält die Spur ihre beim Aufprall eingenommene Benetzungsfläche bei oder breitet sich noch leicht aus.
b) Das Substrat ist nicht benetzbar, wenn die Spurbreite zwischen dem Auftreffen der Flüssigkeit und der Einstellung des statischen Zustands abnimmt. Dies ist darauf zurückzuführen, dass durch die kinetische Energie der Flüssigkeit die Flüssigkeitsspur einen Zustand einnimmt, der wesentlich vom mechanischen Gleichgewicht abweicht. Die Spur ist daher deformiert und vorübergehend flacher, als sie nach dem Gleichgewichts-Kontaktwinkel eigentlich sein sollte. Anschließend zieht sich die Flüssigkeit dann zusammen und erreicht einen statischen Zustand, der einer kleineren lateralen Ausdehnung des Benetzungsbereichs entspricht. Die Oberflächenspannung der Flüssigkeit führt also dazu, dass sich die Flüssigkeit zwischen dem Auftreffen und der Einstellung des statischen Zustandes zu einer Spur geringerer Ausdehnung zusammenzieht .

Wie weit sich die Spur nach dem Aufprall wieder zusammenzieht, hängt entscheidend von den Oberflächeneigenschaften des Festkörpers und der Flüssigkeit ab.

Grundsätzlich ist es, ohne von dem Prinzip der Erfindung abzuweichen, auch möglich, anstelle der Breite der Flüssigkeitsspur deren Höhe bzw. die Veränderung derselben zu messen. In dem Maße, wie die Flüssigkeitsspur breiter/schmaler wird, wird sie wegen des im wesentlichen konstanten Volumens niedriger/höher. Insoweit können die Breite und die Höhe der Flüssigkeitsspur als äquivalente Größen angesehen werden.

Vorzugsweise wird z. B. mit Hilfe einer Dosiervorrichtung ein konstantes Flüssigkeitsvolumen pro Zeit eingestellt. Dies bringt gerade im Hinblick auf die Automatisierung des Verfahrens erhebliche Vorteile mit sich. Bevorzugt werden daher als Dosiervorrichtung auch automatische Durchflussregler eingesetzt.

In einer weiteren vorteilhaften Weiterbildung kann mit Hilfe bspw. einer Dosiervorrichtung die kinetische Energie des Tropfens, z.B. durch definierte Beschleunigung der Flüssigkeit, exakt eingestellt werden. Derartige Möglichkeiten bieten beispielsweise die aus dem Stand der Technik bekannten Düsen-Systeme als Dosiervorrichtung.

Vorzugsweise erfolgt die Messung der Ausdehnung der Flüssigkeitsspur, indem diese mit mindestens einem Sensor bestimmt wird. Bevorzugt werden dabei optische Sensoren, wie z.B. Photodioden, -transistoren, -widerstände oder CCD (charged coupled device)-Kameras eingesetzt. Es können der Flüssigkeit zusätzlich Farbstoffe zugegeben werden, welche bestimmte Wellenlängen absorbieren oder reflektieren um die Detektion zu erleichtern. Die Flüssigkeit kann auch unter Verwendung fluoreszierender Stoffe und die anschließende Messung der Fluoreszenzintensität mit Hilfe eines Fluoreszenzdetektors erfasst werden. Ebenso sind aber auch Absorptionsmessungen, Messungen der Reflexion, Beugung oder Streuung möglich.

Alternativ lassen sich zur der Ausdehnung der Flüssigkeitsspur proportionale Größe erfassen. Hierzu zählen beispielsweise die Verwendung von kapazitiven Sensoren oder bei Verwendung von magnetischen Flüssigkeiten oder Zusätzen induktive Sensoren.

Der Zeitraum zwischen dem Auftreffen des Flüssigkeitsstrahls und der Einstellung des statischen Zustands liegt insbesondere bei Wasser bei weniger als einer Millisekunde (1 ms). Für organische Flüssigkeiten und deren Gemische liegt diese Zeit im Bereich zwischen 0,1 und 10 sec. besonders bevorzugt zwischen 0,01 und 1 sec. Insofern sollte der zeitliche Abstand zwischen den Messungen der Breiten der Flüssigkeitsspur dementsprechend gewählt werden, dass die ersten Messung noch vor, die zweite Messung idealerweise nach Einstellung des Gleichgewichtes erfolgt.

Die Relativgeschwindigkeit zwischen der Vorrichtung und der zu untersuchenden Oberfläche 8 kann mehr als 1000 m/min und weniger als 0,5 m/min betragen. Besonders bevorzugte Geschwindigkeiten liegen bei 800 m/min bis 1 m/min.

Zur Durchführung des Verfahrens lassen sich beliebige Flüssigkeiten einsetzen, bevorzugt werden Wasser sowie Flüssigkeiten aus der Gruppe der Alkohole, der Amide, der Ester, der Ether und deren Mischungen ausgewählt. Bei Verwendung von Mischungen aus zwei unterschiedlichen Flüssigkeiten Fᵢ mit sich unterscheidenden Oberflächenspannungen γ_{T}(Fᵢ), kann so eine definierte Oberflächenspannung γ_{T}(Fₘ) der resultierenden Mischung eingestellt werden. Dadurch ist es möglich, dass praktisch jede Oberflächenspannung im Bereich zwischen 20 und 72 mN/m beliebig eingestellt werden kann.

Das Verfahren kann nun mit unterschiedlichen Substraten durchgeführt werden, um Vergleichsangaben über die Benetzbarkeit der Substrate zu erhalten. Hierzu zählt beispielsweise, dass ein Substrat vor und nach einer Oberflächenbehandlung mit Hilfe des erfindungsgemäßen Verfahrens auf die Benetzbarkeit hin untersucht wird. Hieraus lassen sich Angaben über die Güte der Oberflächenbehandlung herleiten.

In einer weiteren vorteilhaften Weiterbildung des Verfahrens kann die Benetzbarkeit des Substrates mit Hilfe mehrerer Flüssigkeiten Fᵢ mit unterschiedlichen Oberflächenspannungen γ_{T} (Fᵢ) bestimmt werden. Damit erhält man für ein einzelnes Substrat anhand verschiedener Flüssigkeiten Aussagen darüber, ob diese Flüssigkeiten noch das Substrat benetzten. Durch Extrapolation, z.B. indem man die Benetzbarkeit gegen die steigende Oberflächenspannung der Flüssigkeiten aufträgt, kann man so einen Grenzwert der Oberflächenspannung der Flüssigkeit erhalten, bei dem eine Benetzung der Oberfläche des Substrates noch gerade möglich ist.

Das Verfahren zur Bestimmung der Benetzbarkeit von Oberflächen von Substraten findet bevorzugt bei der Qualitätsprüfung und Prozessüberwachung Verwendung. Hierbei geht es vor allem darum, Oberflächenmodifizierung auf ihre Güte zu überprüfen.

Die Qualitätskontrolle im Falle eines Oberflächenbehandlungsverfahrens kann durch Vergleich von Messungen einer unbehandelten Oberfläche und einer behandelten Oberfläche erfolgen, um ein Ergebnis der Behandlung der Oberfläche festzustellen.

Auch kann bei einer in-situ erfolgenden Qualitätskontrolle die ermittelte Benetzbarkeit der Oberfläche bspw. einer Folienbahn oder eines anderen Erzeugnisses als Regelparameter zur Steuerung/Regelung des Produktionsprozesses verwendet werden. Mit anderen Worten kann anhand der ermittelten Oberflächenqualität der Produktionsprozess erforderlichenfalls angepasst werden. Dazu kann es erforderlich sein, bspw. für eine veränderte Produktionsgeschwindigkeit einer Folienbahn die Dosierung des Flüssigkeitsstrahls entsprechend der geänderten Relativgeschwindigkeit zwischen der Oberfläche und dem Flüssigkeitsstrahl anzupassen, um weiterhin eine für das Verfahren geeignete Menge an Flüssigkeit pro Zeiteinheit auf die Oberfläche aufzubringen.

Um die durchgeführte Qualitätsüberwachung und deren Ergebnis auf einfache Weise festzuhalten, kann die Flüssigkeit mit Farbpigmenten oder fluoreszierenden Partikeln versetzt und die Flüssigkeitsspur getrocknet bzw. verdampft werden. So verbleibt auf der Oberfläche der untersuchten Probe ein "Strich", aus dem abgelesen werden kann, an welchen Stellen die Überprüfung durchgeführt worden ist, und ob die Oberfläche an dieser Stelle benetzbar war oder nicht.

Die Flüssigkeitsspur kann nach dem Messen der Benetzbarkeit jedoch auch von der Oberfläche abgewischt oder sonst wie entfernt werden, um die Spuren der vorgenommenen Messung zu tilgen.

Die Oberfläche kann bei der Verwendung des Verfahrens in der oben beschriebenen Weise an mehreren Stellen, auch seitlich versetzt nebeneinander auf ihre Benetzbarkeit hin untersucht werden, um eine bessere Datendichte zu erhalten. Auch kann der Flüssigkeitsstrahl gepulst oder sonst wie diskontinuierlich auf die Oberfläche aufgebracht werden, um in der Richtung der Relativbewegung verschiedenen Messpunkte zu bestimmen.

Die zu messende Oberfläche kann sich relativ zu dem Flüssigkeitsstrahl linear bewegen (bspw. Bewegung einer Folie in einer Ebene), die Bewegung kann jedoch auch eine radiale Komponente aufweisen (z.B. kann eine auf eine Trommel oder Walze auflaufende Folie vermessen werden).

Erfindungsgemäß wird auch eine Vorrichtung zur Bestimmung der Benetzbarkeit einer Oberfläche eines Substrates bereitgestellt, die eine Dosiervorrichtung zur Aufbringung eines Flüssigkeitsstrahls einer Flüssigkeit Fᵢ mit bekannter Oberflächenspannung γ_{T}(Fᵢ) auf ein Substrat unter Ausbildung einer zusammenhängenden Flüssigkeitsspur aufweist. Weitere Bestandteile dieses Systems sind mindestens zwei Vorrichtungen zur Detektion der Breite der Flüssigkeitsspur sowie eine Auswerteeinheit zur Bestimmung der Änderung der Breite der Flüssigkeitsspur zwischen den Detektoren. Aus der Änderung dieser Breite werden gemäß dem obigen Verfahren Rückschlüsse auf das Benetzungsverhalten des Substrates gezogen.

Die Dosiervorrichtung ist dabei vorzugsweise in Bezug auf den Abstand und auf den Winkel zum Substrat frei positionierbar.

Bevorzugt werden als Vorrichtung zur Messung der Breite der Flüssigkeitsspur optische Sensoren, wie z.B. eine CCD-Kamera, eingesetzt. Es ist aber ebenso möglich, dass die Vorrichtung zur Messung der Breite der Flüssigkeitsspur aus einem Fluoreszenzdetektor besteht, wenn eine fluoreszierende Flüssigkeit auf das Substrat aufgebracht wird.

Vorzugsweise wird eine elektronische Auswerteeinheit eingesetzt, mit der eine einfache und automatisierte Bestimmung der Benetzbarkeit aus den gemessenen Breiten der Flüssigkeitsspur möglich ist. Erfolgt die Messung der Benetzung anhand einer hierzu proportionalen Größe, kann auch eine Auswerteeinheit für Intensitätsmessungen, wie z.B. Absorptions- oder Fluoreszenzmessungen, verwendet werden.

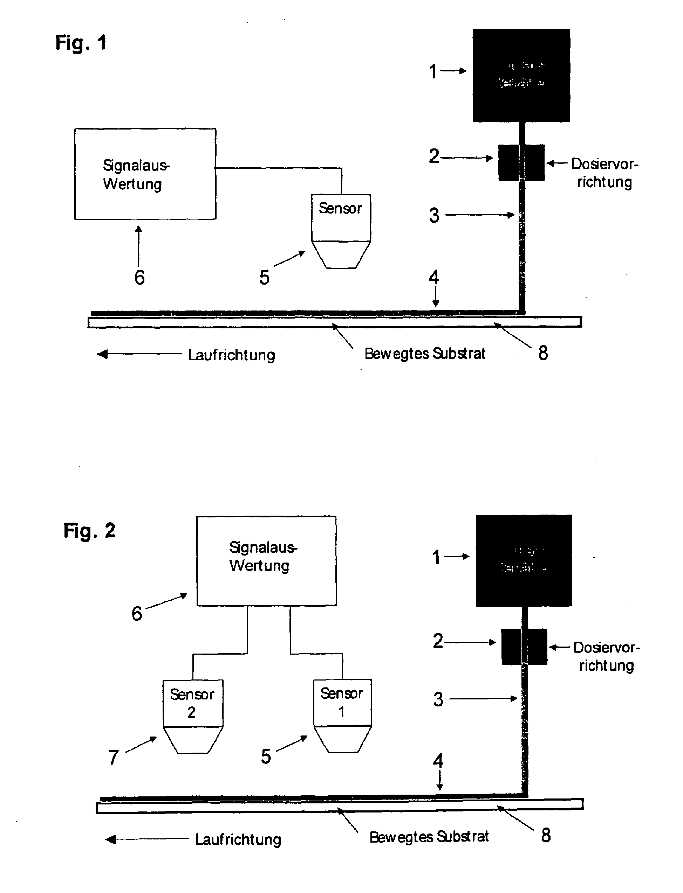

Zwei Ausführungsbeispiele der Erfindung sind in den Zeichnungen Fig. 1 und Fig. 2 schematisch dargestellt und werden nachfolgend kurz beschrieben.

In den Figuren zeigen:
- Fig. 1: schematisch einen ersten erfindungsgemäßen Aufbau zur Bestimmung der Benetzbarkeit der Oberfläche eines Substrates und
- Fig. 2: schematisch einen zweiten erfindungsgemäßen Aufbau zur Bestimmung der Benetzbarkeit der Oberfläche eines Substrates.

In den Figuren sind schematisch zwei mögliche Aufbauten zur Durchführung des erfindungsgemäßen Verfahrens, also zwei mögliche erfindungsgemäße Vorrichtungen gezeigt.

Die Vorrichtungen enthalten jeweils einen Vorratsbehälter 1 für eine Testflüssigkeit. Dieser Vorratsbehälter ist über eine Leitung mit einer Dosiervorrichtung 2 verbunden, über die ein Flüssigkeitsstrahl 3 auf die Oberfläche eines in Richtung des mit "Laufrichtung" bezeichneten Pfeils bewegten Substrates 8 gegeben werden kann. Auf der Oberfläche des Substrates 8 bildet sich dann eine Flüssigkeitsspur 4 aus, deren Breite sich zunächst im wesentlichen aus der kinetischen Energie ergibt, mit der der Flüssigkeitsstrahl 3 auf die Oberfläche auftrifft und dann zu einem durch die Oberflächenspannung bedingten Gleichgewicht einstellt.

In den Vorrichtungen ist ferner ein Sensor 5 (Fig. 1) bzw. sind zwei Sensoren 5 und 7 enthalten, die die Breite der Flüssigkeitsspur feststellen können. Im Falle der Figur 1 ist ein Sensor 5 verwendet, der die Breite der Flüssigkeitsspur 4 über eine größere Strecke bestimmen kann (z. B. eine CCD-Kamera). Im Falle der Figur 2 dagegen werden zwei Sensoren 5 und 7 eingesetzt, die die Breite der Flüssigkeitsspur 4 nur im wesentlichen punktuell erfassen.

Die Sensoren sind in beiden Beispielen mit einer Auswerteeinheit 6 verbunden, in welcher die erfassten Breiten der Flüssigkeitsspur bestimmt und daraus anhand des oben geschilderten Verfahrens eine Benetzbarkeit der Oberfläche des Substrates 8 bestimmt wird.

Nachfolgend werden zwei Beispiele angegeben, in denen das erfindungsgemäße Verfahren umgesetzt worden ist.

### Beispiel 1:

Aus einem Dosiersystem wird aus 2 cm Höhe ein Flüssigkeitsstrahl auf eine zu untersuchende mit 100 m/min bewegte PP-Folie abgegeben. Der Strahl trifft auf die Oberfläche und 5 cm hinter dem Auftreffpunkt detektiert eine Kamera die Spurbreite der Flüssigkeit. Aus der Breite der Spur bestimmt eine computergestützte Auswerteeinheit, ob ein bestimmter Wert der Oberflächenspannung erreicht wurde oder nicht, und somit, ob die zuvor erfolgte Modifizierung der Oberfläche ausreichend ist.

### Beispiel 2:

Mit einer Düse wird aus 1 cm Abstand eine Flüssigkeit, welche bei einer Oberflächenenergie von 60 mN/m benetzt, auf eine vorbeifahrende Glasscheibe gegeben. Der Strahl trifft auf die nicht beschichtete Oberfläche und bildet eine Flüssigkeitsspur von 3 mm Breite 3 cm hinter dem Auftrag.

Das gleiche Verfahren wird auf der beschichteten Oberfläche der Glasscheibe angewandt. Die Beschichtung erfolgte dabei durch das Aufsputtern von Titanoxid. Nach dem Aufprall des Strahls hinterlässt dieser eine Spur von 6 mm Breite. Die von der Spur bedeckte Fläche verändert sich auch nach mehreren Sekunden nicht.

### Bezugszeichenliste

- 1: Vorratsbehälter
- 2: Dosiervorrichtung
- 3: Flüssigkeitsstrahl
- 4: Flüssigkeitsspur
- 5: Sensor
- 6: Auswerteeinheit
- 7: Sensor
- 8: Substrat

## Patentansprüche

1. Verfahren zur Bestimmung der Benetzbarkeit einer Oberfläche eines Substrates (8) mit folgenden Schritten:
i) Aufbringen eines Flüssigkeitstrahls (3) mindestens einer Flüssigkeit (Fᵢ) mit einer Oberflächenspannung (γ_{T}(Fᵢ)) auf das Substrat (8), wobei das Substrat (8) und der Flüssigkeitsstrahl (3) in einer quer zu dem Flüssigkeitsstrahl (3) verlaufenden Ebene relativ zueinander bewegt werden und wobei die kinetische Energie des Flüssigkeitsstrahls (3) derart eingestellt wird, dass sich eine Flüssigkeitsspur (4) auf dem Substrat (8) bildet,
ii) Messen der Breite der Flüssigkeitsspur (4) im wesentlichen unmittelbar nach dem Auftreffen des Flüssigkeitsstrahls (3) auf dem Substrat (8) und in einem Abstand zu dem Auftreffpunkt des Flüssigkeitsstrahls (3) auf dem Substrat (8),
iii) Bestimmen der Benetzbarkeit über die Auswertung der in Schritt ii) gemessenen Flüssigkeitsspurbreite anhand folgender Kriterien:
a) das Substrat ist benetzbar, wenn die Breite der Flüssigkeisspur (4) zwischen den in ii) genannten Punkten konstant bleibt oder zunimmt,
b) das Substrat ist nicht benetzbar, wenn die Breite der Flüssigkeitsspur (4) zwischen den in ii) genannten Punkten abnimmt.

2. Verfahren nach Anspruch 1, **dadurch gekennzeichnet, dass** in Schritt i) die kinetische Energie des Strahls (3) über eine Fallhöhe des Strahls und/oder eine Strahlgeschwindigkeit derart eingestellt wird, dass die Oberfläche durch eine zusammenhängende Flüssigkeitsspur (4) benetzt wird.

3. Verfahren nach mindestens einem der vorhergehenden Ansprüche, **dadurch gekennzeichnet, dass** ein konstantes Flüssigkeitsvolumen auf die Oberfläche abgegeben wird.

4. Verfahren nach mindestens einem der vorhergehenden Ansprüche, **dadurch gekennzeichnet, dass** die Breite der Flüssigkeitsspur (4) mit mindestens einem optischen Sensor (5) detektiert wird.

5. Verfahren nach mindestens einem der vorhergehenden Ansprüche, **dadurch gekennzeichnet, dass** die Breite der Flüssigkeitsspur (4) mit mindestens zwei optischen Sensoren (5, 7) detektiert wird, wobei in Schritt iii) die Änderung der gemessenen Breite der Flüssigkeitsspur (4) zwischen den beiden Sensoren (5,7) ausgewertet wird.

6. Verfahren nach mindestens einem der vorhergehenden Ansprüche, **dadurch gekennzeichnet, dass** die Flüssigkeitsspur (4) mit mindestens einer Kamera aufgenommen und in Schritt iii) die Veränderung der Breite der Flüssigkeitsspur (4) durch ein Bildverarbeitungssystem bestimmt werden.

7. Verfahren nach mindestens einem der vorhergehenden Ansprüche, **dadurch gekennzeichnet, dass** mindestens eine Flüssigkeit (Fᵢ) ausgewählt ist aus der Gruppe der Alkohole, der Amide, der Ester, der Ether, Wasser sowie Mischungen der genannten Flüssigkeiten.

8. Verfahren nach mindestens einem der vorhergehenden Ansprüche, **dadurch gekennzeichnet, dass** mindestens zwei Flüssigkeiten (Fᵢ) mit unterschiedlichen Oberflächenspannungen (γ_{T}(Fᵢ)) derart gemischt werden, dass eine Oberflächenspannung (γ_{T}(Fₘ)) der Mischung definiert eingestellt wird.

9. Verfahren nach mindestens einem der vorhergehenden Ansprüche, **dadurch gekennzeichnet, dass** der Flüssigkeit (Fi) Kontrastmittel, z.B. Farbpigmente, Fluorophore und/oder Absorbentien, optisch markierte Flüssigkeiten (Fᵢ) beigegeben werden.

10. Verfahren nach mindestens einem der vorhergehenden Ansprüche, **dadurch gekennzeichnet, dass** die Benetzbarkeit unter Verwendung von nacheinander verschiedenen Flüssigkeiten Fᵢ mit unterschiedlichen Oberflächenspannungen (γ_{T}(Fᵢ)) bestimmt und durch Extrapolation ein Benetzungsgrenzwert in Abhängigkeit von der Oberflächenspannung bestimmt wird.

11. Verfahren nach mindestens einem der vorhergehenden Ansprüche, **dadurch gekennzeichnet, dass** die Oberfläche beschleunigt bewegt wird.

12. Verfahren nach mindestens einem der vorhergehenden Ansprüche, **dadurch gekennzeichnet, dass** die Messung der Breite der Flüssigkeitsspur (4) auf der Oberfläche nach dem Trocknen der Spur erfolgt.

13. Verwendung des Verfahrens nach mindestens einem der vorhergehenden Ansprüche zur Qualitätsprüfung, Überwachung und/oder Steuerung von Oberflächenmodifizierungen, wobei die Benetzbarkeit für ein oberflächenmodifiziertes und ein unbehandeltes Substrat verglichen und daraus die Güte der Oberflächenbehandlung bestimmt wird.

14. Vorrichtung zur Bestimmung der Benetzbarkeit einer Oberfläche eines Substrates (8) mit einer Dosiervorrichtung (2) zur Aufbringung eines Flüssigkeitsstrahls (3) einer Flüssigkeit (Fᵢ) mit bekannter Oberflächenspannung (γ_{T}(Fᵢ)) auf ein Substrat (8) unter Ausbildung einer zusammenhängenden Flüssigkeitsspur (4), mindestens einer Vorrichtung (5) zur Messung der Breite der Flüssigkeitsspur (4) sowie einer Auswerteeinheit (6) zur Bestimmung der Benetzbarkeit aus den Breiten der Flüssigkeitsspur (4).

15. Vorrichtung nach Anspruch 14, **dadurch gekennzeichnet, dass** die Dosiervorrichtung (2) in Bezug auf Abstand und Winkel zum Substrat (8) frei positionierbar ist.

16. Vorrichtung nach mindestens einem der Ansprüche 14 öder 15, **dadurch gekennzeichnet, dass** die Dosiervorrichtung (2) ein Durchflussregler ist.

17. Vorrichtung nach mindestens einem der Ansprüche 14 bis 16, **dadurch gekennzeichnet, dass** die Dosiervorrichtung (2) für eine definierte Einstellung der kinetischen Energie des Flüssigkeitsstrahls eingerichtet ist.

18. Vorrichtung nach Anspruch 17, **dadurch gekennzeichnet, dass** die Dosiervorrichtung (2) ein Ink-Jet-System ist.

19. Vorrichtung nach mindestens einem der Ansprüche 14 bis 18, **dadurch gekennzeichnet, dass** die Vorrichtung zur Messung der Benetzungsbreite eine Kamera, insbesondere eine digitale Kamera, z.B. eine CCD-Kamera, ist.

20. Vorrichtung nach mindestens einem der Ansprüche 14 bis 19, **dadurch gekennzeichnet, dass** die Vorrichtung zur Messung der Benetzungsfläche (5) ein Fluoreszenzdetektor ist.

## Claims

1. Method for determining the wettability of a surface of a substrate (8) with the following steps:
i) applying a liquid jet (3) of at least one liquid (Fi) with a surface tension (γT(Fi)) to the substrate (8), said substrate (8) and the liquid jet (3) being moved relative to one another in a plane running at right angles to the liquid jet (3) and in which the kinetic energy of the liquid jet (3) is adjusted in such a way that a liquid track (4) is formed on substrate (8),
ii) measuring the width of the liquid track (4) substantially directly following the impact of the liquid jet (3) on the substrate (8) and at a distance from the impact point of said liquid jet (3) on said substrate (8),
iii) determining the wettability via the evaluation of the liquid track width measured in step ii) on the basis of the following criteria:
a) the substrate is wettable if the width of the liquid track (4) between the points indicated in ii) remains constant or increases,
b) the substrate is not wettable if the width of the liquid track (4) between the points indicated in ii) decreases.

2. Method according to claim 1, **characterized in that** in step i) the kinetic energy of the jet (3) is so adjusted over a height of fall of the jet and/or a jet velocity that the surface is wetted by a continuous liquid track (4).

3. Method according to at least one of the preceding claims, **characterized in that** a constant liquid volume is delivered to the surface.

4. Method according to at least one of the preceding claims, **characterized in that** the width of the liquid track (4) is detected with at least one optical sensor (5).

5. Method according to at least one of the preceding claims, **characterized in that** the width of the liquid track (4) is detected with at least two optical sensors (5, 7) and in step iii) the change to the measured width of the liquid track (4) between the two sensors (5, 7) is evaluated.

6. Method according to at least one of the preceding claims, **characterized in that** the liquid track (4) is recorded with at least one camera and in step iii) the change to the width of the liquid track (4) is determined by an image processing system.

7. Method according to at least one of the preceding claims, **characterized in that** at least one liquid (Fi) is selected from the group of alcohols, amides, esters, ethers, waters and mixtures of said liquids.

8. Method according to at least one of the preceding claims, **characterized in that** at least two liquids (Fi) with different surface tension (γT(Fi) are so mixed together that a surface tension (γT(Fm)) of the mixture is set in a defined manner.

9. Method according to at least one of the preceding claims, **characterized in that** to the liquid (Fi) are added contrast media, e.g. dye pigments, fluorophores and/or absorbents, optically marked liquids (Fi).

10. Method according to at least one of the preceding claims, **characterized in that** the wettability is determined using successively different liquids (Fi) with different surface tension (γT(Fi)) and by extrapolation a wetting limit value is determined as a function of the surface tension.

11. Method according to at least one of the preceding claims, **characterized in that** the surface is moved in accelerated manner.

12. Method according to at least one of the preceding claims, **characterized in that** the width of the liquid track (4) on the surface is measured following the drying of the track.

13. Use of the method according to at least one of the preceding claims for quality testing, monitoring and/or controlling surface modifications, the wettability for a surface-modified and an untreated substrate being compared and the surface treatment quality is determined therefrom.

14. Device for determining the wettability of a surface of a substrate (8) with a dosing device (2) for applying a jet (3) of a liquid (Fi) with known surface tension (γT(Fi)) to a substrate (8) accompanied by the formation of a continuous liquid track (4), at least one device (5) for measuring the width of the liquid track (4) and an evaluating unit (6) for determining the wettability on the basis of the widths of the liquid track (4).

15. Device according to claim 14, **characterized in that** the dosing device (2) is freely positionable relative to the spacing and angle with respect to substrate (8).

16. Device according to at least one of the claims 14 or 15, **characterized in that** the dosing device (20 is a flow controller.

17. Device according to at least one of the claims 14 to 16, **characterized in that** the dosing device (2) is set up for a clearly defined setting of the kinetic energy of the liquid jet.

18. Device according to claim 17, **characterized in that** the dosing device (2) is an ink jet system.

19. Device according to at least one of the claims 14 to 18, **characterized in that** the device for measuring the wetting width is a camera, particularly a digital camera, e.g. a CCD camera.

20. Device according to at least one of the claims 14 to 19, **characterized in that** the device for measuring the wetting surface (5) is a fluorescence detector.

## Revendications

1. Procédé pour déterminer la mouillabilité d'une surface de substrat (8) comprenant les étapes suivantes :
i) application d'un jet de liquide (3) d'au moins un liquide (Fᵢ) avec une tension superficielle (γ_{T}(Fᵢ) ) sur le substrat (8), le substrat (8) et le jet de liquide (3) étant déplacés l'un par rapport à l'autre dans un plan agencé transversalement au jet de liquide (3) et l'énergie cinétique du jet de liquide (3) étant réglée de telle sorte qu'une trace de liquide (4) se forme sur le substrat (8),
ii) mesure de la largeur de la trace de liquide (4) sensiblement directement après l'arrivée du jet de liquide (3) sur le substrat (8) et à une distance du point d'impact du jet de liquide (3) sur le substrat (8),
iii) détermination de la mouillabilité par l'analyse de la largeur de trace de liquide mesurée à l'étape ii) à l'aide des critères suivantes :
a) le substrat est mouillable lorsque la largeur de la trace de liquide (4) entre les points cités dans ii) reste constante ou augmente,
b) le substrat n'est pas mouillable lorsque la largeur de la trace de liquide (4) entre les points cités dans ii) diminue.

2. Procédé selon la revendication 1, **caractérisé en ce que**, à l'étape i), l'énergie cinétique du jet (3) est réglée par une hauteur de chute du jet et/ou une vitesse du jet de telle sorte que la surface est mouillée par une trace de liquide (4) cohérente.

3. Procédé selon au moins l'une des revendications précédentes, **caractérisé en ce qu'**un volume constant du liquide est délivré sur la surface.

4. Procédé selon au moins l'une des revendications précédentes, **caractérisé en ce que** la largeur de la trace de liquide (4) est détectée avec au moins un capteur (5) optique.

5. Procédé selon au moins l'une des revendications précédentes, **caractérisé en ce que** la largeur de la trace de liquide (4) est détectée avec au moins deux capteurs (5, 7) optiques, la variation de la largeur mesurée de la trace de liquide (4) entre les deux capteurs (5, 7) étant analysée à l'étape iii).

6. Procédé selon au moins l'une des revendications précédentes, **caractérisé en ce que** la trace de liquide (4) est enregistrée avec au moins une caméra et la variation de la largeur de la trace de liquide (4) est déterminée à l'étape iii) par un système de traitement d'images.

7. Procédé selon au moins l'une des revendications précédentes, **caractérisé en ce qu'**au moins un liquide (Fᵢ) est sélectionné dans le groupe des alcools, des amides, des esters, des éthers ou des mélanges des liquides cités.

8. Procédé selon au moins l'une des revendications précédentes, **caractérisé en ce qu'**au moins deux liquides (Fᵢ) présentant différentes tensions de surface (γ_{T}(Fᵢ)) sont mélangés de telle sorte qu'une tension superficielle (γ_{T}(Fₘ)) du mélange est réglée de façon définie.

9. Procédé selon au moins l'une des revendications précédentes, **caractérisé en ce que** des agents de contraste, par exemple des pigments colorés, des fluorophores et/ou des produits absorbants, des liquides (Fᵢ) repérés visuellement sont ajoutés au liquide (Fᵢ).

10. Procédé selon au moins l'une des revendications précédentes, **caractérisé en ce que** la mouillabilité est déterminée en utilisant successivement différents liquides (Fᵢ) avec différentes tensions superficielles (γ_{T}(Fᵢ) ) et une valeur limite de mouillage est déterminée par extrapolation en fonction de la tension de surface.

11. Procédé selon au moins l'une des revendications précédentes, **caractérisé en ce que** la surface est déplacée de façon accélérée.

12. Procédé selon au moins l'une des revendications précédentes, **caractérisé en ce que** la mesure de la largeur de la trace de liquide (4) s'effectue sur la surface après le séchage de la trace.

13. Utilisation du procédé selon au moins l'une des revendications précédentes pour le test de qualité, le contrôle et/ou la commande de modifications de surface, la mouillabilité pour un substrat modifié en surface et un substrat non traité étant comparée et la qualité du traitement de surface étant déterminée à partir de là.

14. Dispositif pour déterminer la mouillabilité d'une surface d'un substrat (8) avec un dispositif de dosage (2) pour l'application d'un jet de liquide (3) d'un liquide (Fᵢ) avec une tension de surface (γ_{T}(Fᵢ) ) connue sur un substrat (8) avec la formation d'une trace de liquide (4) cohérente, au moins un dispositif (5) pour la mesure de la largeur de la trace de liquide (4) et une unité d'analyse (6) pour la détermination de la mouillabilité à partir des largeurs de la trace de liquide (4).

15. Dispositif selon la revendication 14, **caractérisé en ce que** le dispositif de dosage (2) peut être positionné librement en ce qui concerne la distance et l'angle par rapport au substrat (8).

16. Dispositif selon au moins l'une des revendications 14 ou 15, **caractérisé en ce que** le dispositif de dosage (2) est un régulateur de passage.

17. Dispositif selon au moins l'une des revendications 14 à 16, **caractérisé en ce que** le dispositif de dosage (2) est aménagé pour un réglage défini de l'énergie cinétique du jet de liquide.

18. Dispositif selon la revendication 17, **caractérisé en ce que** le dispositif de dosage (2) est un système à jet d'encre.

19. Dispositif selon au moins l'une des revendications 14 à 18, **caractérisé en ce que** le dispositif pour la mesure de la largeur de mouillage est une caméra, en particulier une caméra numérique, par exemple une caméra CCD.

20. Dispositif selon au moins l'une des revendications 14 à 19, **caractérisé en ce** le dispositif pour la mesure de la surface de mouillage (5) est un détecteur à fluorescence.
